# EUROPÄISCHE PATENTSCHRIFT

(11) **EP 1 589 291 B1**
(45) Veröffentlichungstag und Bekanntmachung des Hinweises auf die Patenterteilung: **02.09.2015**
(21) Anmeldenummer: 05103187.0
(22) Anmeldetag: 20.04.2005
(51) Int. Cl.: F24C 15/16

(54) **Auszugssystem für ein Haushaltsgerät**
Pull-out system for household appliance
Système d'extraction pour appareil ménager

(30) Priorität: 20.04.2004 DE 102004019104
(43) Veröffentlichungstag der Anmeldung: 26.10.2005
(73) Patentinhaber: BSH Hausgeräte GmbH, 81739 München (DE)
(72) Erfinder: Brunner, Martin, 75172, Pforzheim (DE); Götz, Bernhard, 75059, Zaisenhausen (DE); Jördens, Frank, 83278, Traunstein (DE); Wiedenmann, Reinhard, 76356, Weingarten (DE)

(56) Entgegenhaltungen:
- DE-A1- 10 054 954
- DE-A1- 10 241 683
- DE-A1- 10 247 192
- DE-A1- 19 949 239

## Beschreibung

Die Erfindung betrifft ein Auszugssystem für ein Haushaltsgerät, insbesondere Gargerät, das Wälzkörper aufweist, die in einem Wälzkörperkäfig angeordnet sind.

Aus der Beschreibungseinleitung von DE 198 59 986 A1 ist ein gattungsgemäßes Auszugssystem bekannt. Das Auszugssystem weist eine ortsfeste innere Schiene und eine bewegliche äußere Schiene auf. Die bewegliche äußere Schiene ist über Kugeln auf der ortsfesten inneren Schiene gelagert. Die Kugeln sind in einem Kugelkäfig drehbar gehaltert. Der Käfig kann aus einem hochtemperaturfesten und gute Gleiteigenschaften aufweisendem Material hergestellt werden, welches eine Mischung aus Kunststoff und Kohlenstoff ist.

Aus EP 0 994 309 A2 ist eine Auszugsvorrichtung bekannt, die teilweise aus einem Garraum herausziehbare Schienen aufweist. Diese sind in ortsfesten Führungen gleitend geführt. Die Schienen und/oder die Führungen sind zumindest an ihren Gleitflächen mit einem Gleitwerkstoff versehen.

Aus DE 102 11 470 A1 ist ein gattungsgemäßes Auszugssystem bekannt, das eine ortsfeste innere Schiene, eine bewegliche Zwischenschiene und eine bewegliche Außenschiene aufweist. Die Schienen sind mit einer einfach zu reinigenden auf PTFE basierten Schicht versehen. Je nach Zugänglichkeit der Schienen bzw. von Bauteilen für Gargut und(oder den Nutzer sind unterschiedliche Beschichtungsqualitäten vorgesehen. So lassen sich Bauteilbereiche, die nach unten weisen, mit einer im Hinblick auf Reinigbarkeit und/oder Abriebsfestigkeit geringeren Beschichtungsqualitäten ausrüsten, als nach oben weisende Bauteilbereiche, die Gargutspritzern unmittelbar ausgesetzt sind.

Aus DE 199 49 239 A1 ist eine Auszugsvorrichtung, insbesondere Teleskopauszugsvorrichtung, bekannt, bei der Schienen mittels Kugellager oder Rollenlager an ortsfesten Führungen geführt sind. Die Kugeln der Kugellager oder die Rollen der Rollenlager bestehen zumindest an ihrer Oberfläche aus einem selbstschmierenden Werkstoff.

Aus DE 38 15 440 ist eine Teleskopeinschubvorrichtung bekannt, die als ein Teleskopauszug mit einer ortsfesten inneren Schiene, einer rollbaren mittleren Schiene und einer rollbaren äußeren Schiene für den Gargutträger ausgebildet ist. An der mittleren Schiene sind je zwei Rollen über Bolzen gelagert. In den Bolzen sind Rillen ausgebildet, die der Aufnahme hochtemperaturbeständigen Fetts oder von Schmierpaste dienen.

Aus der DE 102 41 683 A1 ist ein Schienenauszug nach dem Oberbegriff des Anspruchs 1 zum horizontalen oder vertikalen Auszug eines Elements, wie eines Schrankelements, einer Gargutauflage, einer Tür eines Gargeräts o. dgl., mit wenigstens einer Aussenschiene aus gebogenem Blech und mit einer diese teilweise umgreifende und auf dieser mittels einer Wälzlagerung verschiebbar geführten Gleitschiene aus gebogenem Blech bekannt. Bei dem Schienenauszug ist eine mit der Aussenschiene verbundene und diese versteifende Zusatzaussenschiene und/oder eine mit der Gleitschiene verbundene und diese versteifende Zusatzschiene vorgesehen.

Die Aufgabe der Erfindung besteht darin, ein Auszugssystem für ein Haushaltsgerät bereitzustellen, das dauerhaft gute Lauf- oder Gleiteigenschaften aufweist.

Die Aufgabe der Erfindung ist mit einem Haushaltsgerät mit den Merkmalen des Patentanspruchs 1 gelöst. Gemäß dem Patentanspruch 1 weist der Walzkörperkäfig zumindest eine Abriebfläche auf, an der die Wälzkörper durch Rotation einen Schmierstoffabrieb erzeugen. Die weiteren Bauteile des Auszugssystems können dagegen mit einer anderen Schicht beschichtet sein, etwa einer Korrosionsschicht, oder unbeschichtet sein. Von der Schmierstoffschicht des Wälzkörperkäfigs abgeriebene Schmierstoffpartikel können in dem erfindungsgemäßen Auszugssystem auch Lauf- oder Gleitflächen erreichen, die nicht mit einer Schmierstoffschicht in Kontakt sind. Dies reicht aus, um aufgabengemäß eine Leichtgängigkeit des Auszugssystems aufrechtzuerhalten.

Erfindungsgemäß kann die Schmierung des Auszugssystems über eine nur auf dem Wälzkörperkäfig vorgesehenen Schmierstoffschicht erreicht werden. Andere Bauteile in dem Auszugssystem, etwa Schienen oder Wälzkörper müssen daher keine Schmierfunktion übernehmen.

Der Wälzkörperkäfig kann aus einem mechanisch belastbaren Material bestehen, etwa Metall, vorzugsweise Stahl. In diesem Fall kann der Käfig einerseits die Schmierung des Auszugssystems übernehmen. Andererseits kann der Wälzkörperkäfig auch als Anschlag zur Begrenzung einer Bewegung der beweglichen Bauteile ausgebildet sein. Dabei auftretende mechanische Belastungen könnten beispielsweise Wälzkörperkäfige nicht standhalten, die aus einem Kunststoff oder aus Kohlenstoff bestehen.

Besonders bevorzugt ist es, wenn der Schmierstoff ein anorganischer Festschmierstoff ist. Ein derartiger Schmierstoff ist im Gegensatz zu vielen anderen Schmierstoffen, wie etwa Flüssigschmierstoffen aus Öl oder Fett, auch bei hohen Temperaturen physiologisch unbedenklich.

Von Vorteil ist es, wenn der Schmierstoff chemisch resistent ist, insbesondere laugenbeständig ist, um eine Reinigung in Geschirrspülmaschine zu ermöglichen. In diesem Fall kann das Auszugssystem auch chemisch aggressiven Medien, beispielsweise Laugen in einer Geschirrspülmaschine, ausgesetzt werden.

Anorganische Festschmierstoffe können sich besonders einfach aus einem Schichtgefüge lösen. Ein Verteilen des anorganischen Festschmierstoffs auf Bauteile, die nicht mit dem Festschmierstoff beschichtet sind, ist daher besonders einfach ermöglicht. Quietschgeräusche oder eine Schwergängigkeit des Auszugssystems sind daher zuverlässig verhindert.

Erfindungsgemäß kann es von Vorteil sein, wenn der Schmierstoff hochtemperaturbeständig ist. Hierzu kommen alle Schmierstoffe in Frage, die bis zu maximalen Garbetriebstemperaturen von bis zu 300° C und gegebenenfalls bis 500° bis 600° C bei der Pyrolyse beständig sind. Besonders bevorzugt ist es dabei, wenn als Festschmierstoff Graphit verwendet wird. Graphit ist selbst bei sehr hohen Temperaturen einsetzbar sowie chemisch resistent und auch kostengünstig. Weiterhin kann als Festschmierstoff Molybdändisulfid verwendet werden. In diesem Fall kann es jedoch bei sehr hohen Temperaturen wegen der Erzeugung von S₂ problematisch werden. Sofern die Fertigungskosten nur von nachrangiger Bedeutung sind, ist als Festschmierstoff auch Bornitrid denkbar, das in allen Temperaturbereichen beständig und physiologisch unbedenklich ist. Entsprechendes gilt auch für Wolframdisulfid.

Von Vorteil ist es, wenn die Schmierstoffschicht ein Bindemittel aufweist, das den Schmierstoff an der Schiene hält. Das Bindemittel bewirkt eine verbesserte Verbindung des Schmierstoffes mit der Schienenoberfläche. Eine solche Verbindung ist im Unterschied dazu nicht gegeben, wenn der Schmierstoff lediglich in einer aufgerauten Schienenoberfläche Halt findet. Besonders vorteilhaft im Hinblick auf eine Schmierstoffschicht mit gleichmäßiger Schichtdicke und gleichmäßigen Oberflächeneigenschaften ist es, wenn das Bindemittel ein Lack ist. Dieser kann beispielsweise auf die Schiene gesprüht werden, wodurch sich eine gleichmäßige Schichtdicke ergibt. Anschließend kann der auf der Schiene aufgebrachte Lack zusammen mit dem Schmierstoff in die Schiene eingebrannt werden. Vorteilig ist dabei der Schmierstoff in dem Lack suspendiert. Durch das Einbrennen können dauerhaft zuverlässige Schmiereigenschaften der Schiene erreicht werden, selbst wenn der Teleskopauszug chemisch aggressiven Medien oder hohen Temperaturen ausgesetzt wird.

Um die Abriebsfestigkeit der Schienenbeschichtung bzw. deren Schichtqualität den Anforderungen entsprechend einzustellen, sind auch Kombinationen der oben genannten Festschmierstoffe aus Graphit, Molybdändisulfid, Bornitrid oder Wolframdisulfid denkbar.

Erfindungsgemäß kann die Schmierung des Auszugssystems weiter verbessert werden, wenn neben dem Wälzkörperkäfig noch ein weiteres Bauteil des Auszugssystems mit der Schmierstoffschicht beschichtet ist, beispielsweise eine ortsfeste und/oder eine bewegliche Schiene des Auszugssystems.

Besonders bevorzugt ist es, wenn die Schmierstoffschicht zusätzlich auf eine bewegliche Schiene aufgebracht ist. Mittels der beweglichen Schiene wird eine verbesserte Verteilung des Schmierstoffes im Auszugssystem erreicht. Die ortsfeste Halteschiene kann dabei mit einer zweiten Schicht beschichtet sein oder unbeschichtet sein.

Für den Fall, dass zwischen der beweglichen Auszugsschiene und der ortsfesten Halteschiene eine Zwischenschiene gelagert ist, ist es günstig, wenn die Zwischenschiene mit der Schmierstoffschicht beschichtet ist. In diesem Fall kann die Zwischenschiene zusammen mit dem Wälzkörperkäfig sowohl die Auszugsschiene als auch die Halteschiene mit Schmierstoff versorgen. Dabei kann fertigungstechnisch vorteilig auf eine Beschichtung der Halteschiene und/oder der Auszugsschiene verzichtet werden. Alternativ kann die äußere Auszugsschiene und/oder die ortsfeste innere Halteschiene mit einer korrosionsbeständigen Schicht versehen werden.

Fertigungstechnisch bevorzugt ist es, wenn der Wälzkörperkäfig vollständig mit der Schmierstoffschicht beschichtet ist. Im Vergleich zu einer nur teilweisen Beschichtung der Zwischenschiene kann somit der Beschichtungsvorgang wesentlich vereinfacht werden.

Spielt der Fertigungsaufwand zum Aufbringen der Schmierstoffschicht auf den Wälzkörperkäfig oder auf die Schiene nur eine untergeordnete Rolle, so ist es denkbar, mehrere Schmierstoffschichten mit verschiedenen Eigenschaften aufzutragen. In diesem Fall kann eine unterste Schichtlage einen großen Anteil an Bindemitteln und entsprechend wenig Festschmierstoff aufweisen. Dadurch ist eine abriebsfeste Halterung des Schmierstoffs auf der Schiene gesichert. Eine oberste Lage kann dagegen wenig Bindemittel und dafür einen hohen Anteil an Festschmierstoff aufweisen. Dadurch ist die Schmiereigenschaft der Zwischenschiene erhöht.

Darüber hinaus kann die Schmierstoffschicht weitere Füllstoffe, etwa aus Keramik enthalten, um dessen Schichtqualität oder Abriebsfestigkeit einzustellen.

Gemäß einer weiteren Ausführungsform kann das Auszugssystem herausnehmbar in dem Gargerät gehaltert sein. In diesem Fall ist einerseits eine einfache Reinigung des Auszugssystems außerhalb des Gargeräts erreicht. Andererseits kann beispielsweise bei einem Pyrolysebetrieb im Gargerät das Auszugssystem herausgenommen werden, um es nicht den hohen Temperaturen im Pyrolysebetrieb auszusetzen.

Bevorzugt kann der Wälzkörperkäfig in einem Hohlraum der beweglichen Bauteile bzw. der Schienen des Auszugssystems angeordnet sein, wodurch der Wälzkörperkäfig vor Verunreinigungen geschützt ist. Daher kann der Wälzkörperkäfig sogar eine Schmierstoffschicht aufweisen, die zwar eine herausragende Schmiereigenschaft aufweist, jedoch aufgrund ihrer Hafteigenschaft nur schwer zu reinigen ist.

Nachfolgend sind zwei Ausführungsbeispiele der Erfindung anhand der beigefügten Figuren beschrieben. Es zeigen:
- Figur 1: gemäß dem ersten Ausführungsbeispiel ein Auszugssystem in einem Gargerät;
- Figur 2: in einer Schnittdarstellung das Auszugssystem des Gargeräts;
- Figur 3: einen Kugelkäfig des Auszugssystems; und
- Figur 4: gemäß einem zweiten Ausführungsbeispiel einen vergrößerten Ausschnitt aus einem Auszugssystem.

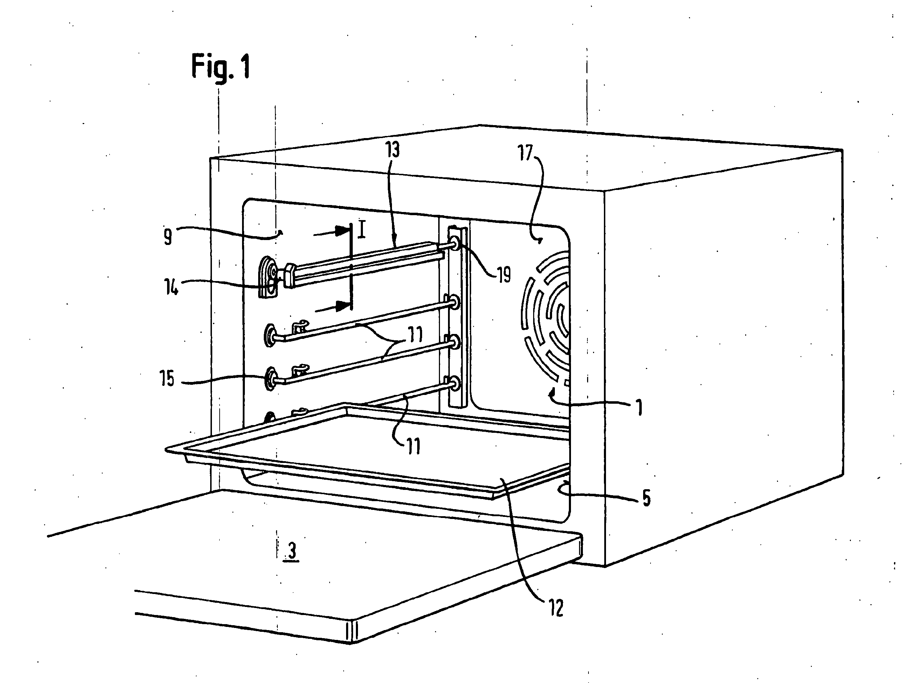

In der Figur 1 ist gemäß dem ersten Ausführungsbeispiel ein Gargerät mit einer Gargerätemuffel 1 dargestellt, die einen Garraum eingrenzt. Das Gargerät weist eine Schwenktür 3 zum Schließen einer frontseitigen Muffelöffnung 5 auf. In der Figur 1 ist die Schwenktür 3 in einem geöffneten Zustand dargestellt. An gegenüberliegenden Seitenwänden 9 der Gargerätemuffel 1 sind korrespondierende seitliche Führungsstäbe 11 sowie ein Auszugssystem, bestehend aus zwei gegenüberliegenden Teleskopauszügen 13, gehaltert. Die Teleskopauszüge 13 sind in einer obersten von vier horizontalen Garraumebenen herausnehmbar gehaltert. In den darunter liegenden drei Garraumebenen sind jeweils die korrespondierenden Führungsstäbe 11 herausnehmbar gehaltert. Auf den beiden korrespondierenden untersten Führungsstäben 11 stützt sich ein Backblech 13 ab, das teilweise aus der Gargerätemuffel 1 herausgeschoben ist. Die Führungsstäbe 11 sind muffelfrontseitig jeweils in einer Lagerbuchse 15 eingesteckt. Diese ist in einer Montageöffnung der Muffelseitenwand 9 montiert. Die Teleskopauszüge 13 sind mit einer Halteplatte 14 ausgebildet, die jeweils in eine Ringnut 16 der Lagerbuchse 15 eingehängt ist. Im Bereich einer Muffelrückwand 17 sind die Führungsstäbe 11 sowie die Teleskopauszüge 13 jeweils in einer Montageöffnung 19 gelagert. Sowohl die Führungsstäbe 11 als auch die Teleskopauszüge 13 sind werkzeugfrei von einem Benutzer aus der Muffel 1 zu lösen.

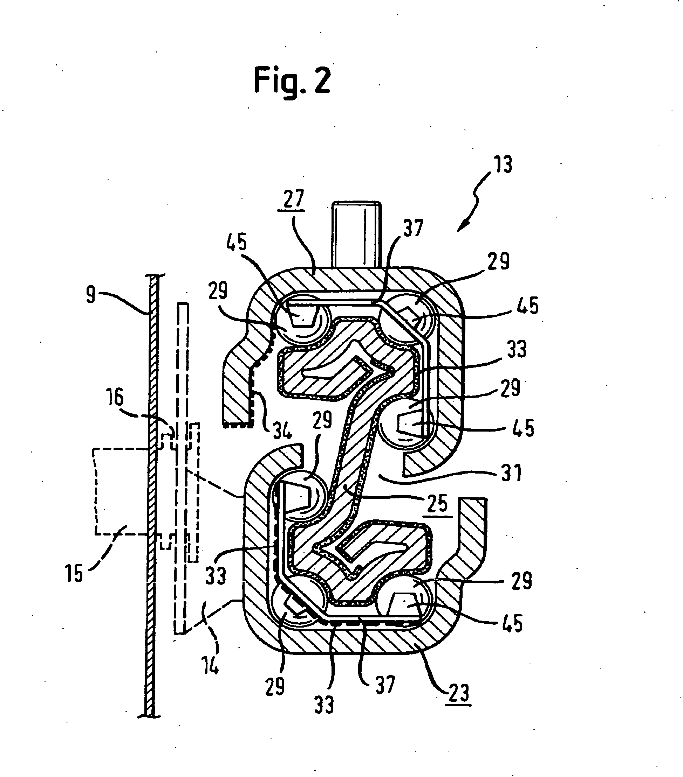

Vorliegend ist das Auszugssystem 13 als ein Teleskopauszug ausgebildet. Der Teleskopauszug 13 ist gemäß der Figur 2 in einer in der Figur 1 gezeigten Blickrichtung I im Querschnitt dargestellt. Der Teleskopauszug 13 weist eine untere Halteschiene 23 auf, die über die Halteplatte 14 ortsfest an der Muffelseitenwand 9 gehaltert ist.

Sowohl die Halteplatte 14 als auch die Lagerbuchse 15 sind in der Figur 2 mit gestrichelten Linien dargestellt. Neben der ortsfesten Halteschiene 23 besteht der Teleskopauszug 13 aus einer beweglichen Zwischenschiene 25 sowie einer ebenfalls beweglichen Auszugsschiene 27. Die Zwischenschiene 25 ist über Kugeln 29 zwischen der Auszugsschiene 27 und der ortsfesten Halteschiene 23 gelagert.

Die Ausgestaltung der Schienen 23, 25, 27 ist nicht auf das vorliegende Ausführungsbeispiel beschränkt. So kann die Halteschiene 23 auch wie ein Rundstab 11 ausgebildet sein. Auf der Halteschiene 23 kann die Auszugsschiene auch über andere Wälzkörper gelagert geführt sein. Dabei ist die Ausgestaltung der Auszugsschiene 27 nicht auf das vorliegende Ausführungsbeispiel beschränkt. Vielmehr kann die Auszugsschiene 27 auch als ein Schlitten, ein Läufer oder ein sonstiges Auszugselement ausgebildet sein. Zwischen dem Auszugselement 27 und der Halteschiene 23 kann auch auf die Anordnung der Zwischenschiene 25 verzichtet werden.

Die Halteschiene 23 und die Auszugsschiene 27 bestehen gemäß der Figur 2 aus zueinander identisch ausgebildeten U-Profilteilen aus einem unbeschichteten Stahlblech. Die beiden Schienen 23, 27 sind mit ihren offenen Seiten einander zugewandt angeordnet. Sie begrenzen einen im Wesentlichen geschlossenen Hohlraum 31, in dem die Zwischenschiene 25 angeordnet ist. Das heißt, dass zumindest im eingeschobenen Zustand des Teleskopauszuges 13 die Zwischenschiene 25 nahezu vollständig von der Auszugsschiene 27 und der Halteschiene 23 umschlossen ist. Fettspritzer, Verschmutzungen oder dergleichen werden daher von den Kugeln 29 und von der Zwischenschiene 25 ferngehalten.

Um ein leichtgängiges Herausziehen und Zusammenschieben des Auszugssystems zu gestatten, ist die Zwischenschiene 25 mit einer Schmierstoffschicht 33 beschichtet. Die Schmierstoffschicht 33 ist in der Figur 2 in übertriebener Schichtdicke dargestellt. Die Schichtdicke liegt realistischerweise in einem Bereich zwischen 10 und 20 µm. Im Gegensatz zur Zwischenschiene 25 sind sowohl die Kugeln 29 als auch die Halteschiene 23 und die Auszugsschiene 27 nicht mit der Schmierstoffschicht 33 beschichtet, sondern unbeschichtet. Dadurch laufen die Kugeln 29 einerseits auf der Schmierstoffschicht 33 der Zwischenschiene 25 und andererseits auf den unbeschichteten Laufflächen der Halteschiene 23 und der Auszugsschiene 27.

Die Oberflächeneigenschaften der Metalloberfläche der Kugeln 29, der Halteschiene 23 sowie der Auszugsschiene 27 einerseits und der Schmierstoffschicht 33 andererseits sind unterschiedlich. Aufgrund dieser unterschiedlichen Oberflächeneigenschaften ergibt sich ein besonders gutes Abrollverhalten der Kugeln 29 und somit gute Laufeigenschaften des Auszugssystems.

Alternativ kann die Halteschiene 23 und/oder die Auszugsschiene 27 mit einer zweiten Schicht beschichtet sein, wie sie in der Figur 2 mit dem Bezugszeichen 34 mit gestrichelter Linie angedeutet ist. Die beiden unterschiedlichen Schichten 33 und 34 weisen unterschiedliche Oberflächeneigenschaften auf. Insbesondere kann bei einer unterschiedlichen Oberflächenhärte das Abrollverhalten der Kugel 29 verbessert werden. Die zweite Schicht 34 kann etwa als eine korrosionsbeständige Schicht ausgebildet sein.

Vorliegend weist die Schmierstoffschicht 33 Partikel aus einem anorganischen Festschmierstoff, wie etwa Graphit auf. Zur Herstellung der Schmierstoffschicht 33 wird zunächst ein Pulver des anorganischen Festschmierstoffs in einer Lacklösung suspendiert und damit anschließend die Zwischenschiene 25 beschichtet. In einem weiteren Arbeitsschritt wird die Lacklösung in die Zwischenschiene 25 eingebrannt. Dadurch ergibt sich eine äußerst hohe mechanische Abriebsfestigkeit der Beschichtung 33 sowie eine gute chemische Widerstandsfähigkeit gegenüber aggressiven Medien, wie etwa Waschmitteln. Neben diesem kostengünstigen Lackierverfahren sind auch andere Verfahren, wie etwa eine PVD-Beschichtung (Physical Vapour Deposition) oder eine CVD-Beschichtung (Chemical Vapour Deposition) zur Herstellung der Schmierstoffschicht 33 denkbar.

Die Schmierstoffschicht 33 der Zwischenschiene 25 reicht aus, um auch zwischen den Kugeln 29 und der Auszugsschiene 27 bzw. der Halteschiene 23 genügend Schmierstoff einzubringen. Die in der Figur 2 dargestellten U-profilförmigen Schienen 23, 27 eignen sich dabei besonders gut, die Zwischenschiene 33 vor Verunreinigungen zu schützen. Bei den in der Figur 2 gezeigten Schienen genügt es, die Schmierstoffschicht 33 nur bezüglich ihrer Schmiereigenschaften anzupassen. Von nachrangiger Bedeutung ist in diesem Fall die Reinigungsfähigkeit der Schmierstoffschicht 33. Der Schutz vor Verunreinigungen der Schmierstoffschicht 33 wird nämlich von der U-profilförmigen Halteschiene 23 bzw. der Auszugsschiene 27 übernommen. Diese wirken zumindest im eingeschobenen Zustand wie Abdeckelemente gegenüber der Zwischenschiene 25. Eine Verunreinigung der Zwischenschiene 25 ist daher weitgehend reduziert.

Erst ein solcher Schutz der Zwischenschiene 25 vor Verunreinigungen ermöglicht daher sinnvoller Weise eine Beschichtung der Zwischenschiene 25 mit der anorganischen Festschmierstoffschicht 33. Eine derartige Schicht ist nämlich - verglichen etwa mit einer auf PTFE basierenden Schicht - nur sehr schwer zu reinigen.

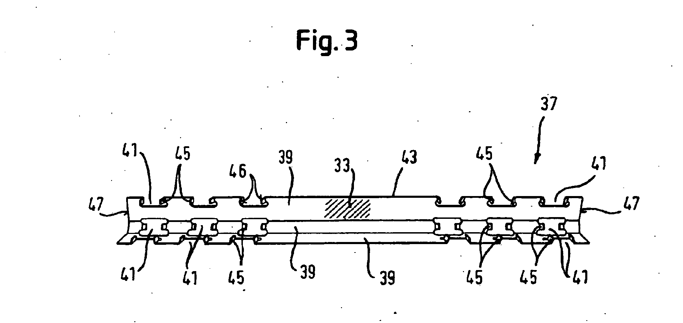

Gemäß den Figur 2 sind die Kugeln 29 in zwei gegenüberliegenden Kugelkäfigen 37 angeordnet. Die Kugeln 29 sind in den Kugelkäfigen 37 drehbar gehaltert. Einer der Kugelkäfige 37 in der Figur 3 gezeigt. Der Kugelkäfig 37 besteht aus einem dünnen Stahlblech, das zu einem Winkelteil mit drei im Profil trapezförmig angeordneten Seiten 39 geformt ist. In jeder der Seiten 39 sind Aussparungen 41 ausgeschnitten. Die Aussparungen 41 sind je Seite 39 in zwei hintereinander liegenden Reihen angeordnet. Die beiden Reihen sind über einen Mittelabschnitt 43 des Kugelkäfigs 37 beabstandet sind. Jede Aussparung 41 ist teilweise von einem abgewinkelten Prägerand 45 begrenzt, der die Kugel 29 in der Aussparung 41 hält. An einer der Kugel 29 zugewandten Seite weist der abgewinkelte Prägerand 45 eine Abriebsfläche 46 auf.

Die in den Figuren 2 und 3 gezeigten Kugelkäfige 37 sind mit der Schmierstoffschicht 33 beschichtet. In der Figur 2 ist die auf dem Kugelkäfig 37 aufgebrachte Schmierstoffschicht 33 mit gestrichelter Linie angedeutet. In der Figur 3 ist die auf dem Kugelkäfig 37 aufgebrachte Schmierstoffschicht 33 in Schraffur angedeutet. Dadurch kann aufgrund der Rotation der Kugeln 29 an der Abriebsfläche 46 des abgewinkelten Prägerands 45 ein geringfügiger Schmierstoffabrieb erzeugt werden. Der Abrieb wird durch die Verstellbewegung des Teleskopauszuges 13 entlang der Laufflächen der Schienen 25, 23, 27 verteilt. Dadurch wird das Auszugsverhalten des Auszugssystems dauerhaft verbessert. Ferner werden Quietschgeräusche oder eine Schwergängigkeit bei der Betätigung des Teleskopauszugs wirksam reduziert. Das Aufbringen der Schmierstoffschicht 33 auf den Kugelkäfig 37 erfolgt dabei wie das Aufbringen der Schmierstoffschicht 33 auf die jeweilige Schiene.

Die Kugelkäfige 37 sind zwischen den Schienen 23, 25, 27 in Längsrichtung frei beweglich. Die Stirnseiten 47 jedes Kugelkäfigs 37 dienen in dem in der Figur 2 gezeigten Teleskopauszug 13 als Anschläge, die eine Längsbewegung der Schienen 23, 25, 27 begrenzen. Der Teleskopauszug 13 kann daher solange auseinander gezogen werden, bis die Stirnseiten 47 des Kugelkäfigs 37 in Anlage mit entsprechenden, nicht gezeigten Schienen-Anschlägen kommen.

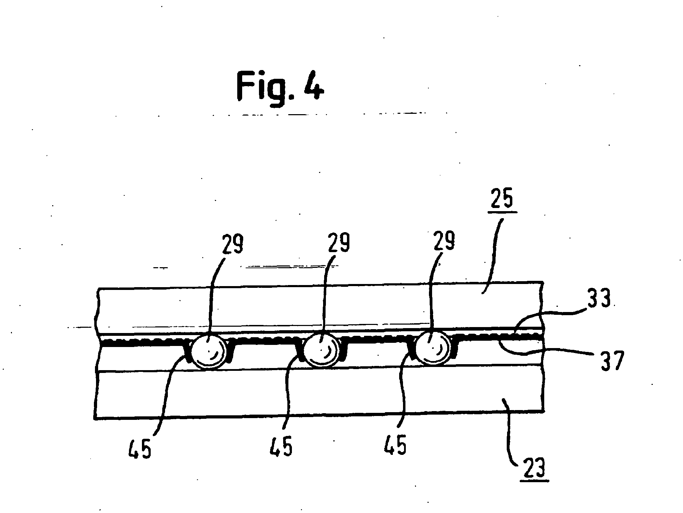

In der Figur 4 ist in einem zweiten Ausführungsbeispiel ein vergrößerter Ausschnitt aus einem Auszugssystem gezeigt, in dem der Kugelkäfig 37 alternativ ausgestaltet ist. Gezeigt sind die Zwischenschiene 25 und die Halteschiene 23, die über die im Kugelkäfig 37 gehalterten Kugeln 29 verschiebbar gelagert sind. Im Unterschied zur Figur 3 ist der abgewinkelte Prägerand 45 jeder Aussparung 41 als ein hochgezogener Kragen ausgebildet. Der hochgezogene Kragen 45 ist wie ein Zylinderabschnitt oder Hülsenabschnitt ausgebildet, der die Kugel 29 vollständig umzieht. Dadurch ist im Vergleich zur Figur 3 die der Kugel 29 zur Verfügung stehende Abriebsfläche 46 des Kugelkäfigs 37 vergrößert. Aufgrund der Rotation der Kugeln 29 kann daher eine größere Schmierstoffmenge von dem Kugelkäfig abgetragen werde, die dem Auszugssystem zur Schmierung zur Verfügung steht.

## Patentansprüche

1. Auszugssystem für ein Haushaltsgerät, insbesondere Gargerät, mit einem Auszugssystem (13), das Wälzkörper (29) aufweist, die in einem Wälzkörperkäfig (37) angeordnet sind, wobei zumindest der Wälzkörperkäfig (37) eine Schmierstoffschicht (33) aufweist, **dadurch gekennzeichnet, dass** der Wälzkörperkäfig (37) zumindest eine Abriebsfläche (46) aufweist, an der die Wälzkörper durch Rotation einen Schmierstoffabrieb erzeugen.

2. Auszugssystem nach Anspruch 1, **dadurch gekennzeichnet, dass** die Schmierstoffschicht (33) einen anorganischen Festschmierstoff enthält.

3. Auszugssystem nach Anspruch 1 oder 2, **dadurch gekennzeichnet, dass** der Wälzkörperkäfig (37) aus einem mechanisch belastbaren Material, etwa Metall, vorzugsweise Stahl besteht.

4. Auszugssystem nach einem der vorhergehenden Ansprüche, **dadurch gekennzeichnet, dass** der Wälzkörperkäfig (37) als Anschlag zur Begrenzung einer Bewegung von Auszugselementen (23, 25, 27) ausgebildet ist.

5. Auszugssystem nach einem der vorhergehenden Ansprüche, **dadurch gekennzeichnet, dass** der Wälzkörperkäfig (37) Aussparungen (41) aufweist, in denen jeweils eine Kugel (29) drehbar gehaltert ist.

6. Auszugssystem nach einem der vorhergehenden Ansprüche, **dadurch gekennzeichnet, dass** die Schmierstoffschicht (33) chemisch resistent ausgebildet ist.

7. Auszugssystem nach einem der vorhergehenden Ansprüche, **dadurch gekennzeichnet, dass** die Schmierstoffschicht (33) hochtemperaturbeständig ausgebildet ist.

8. Auszugssystem nach einem der vorhergehenden Ansprüche, **dadurch gekennzeichnet, dass** die Schmierstoffschicht (33) Graphit aufweist.

9. Auszugssystem nach einem der vorhergehenden Ansprüche, **dadurch gekennzeichnet, dass** die Schmierstoffschicht (33) Molybdändisulfid aufweist.

10. Auszugssystem nach einem der vorhergehenden Ansprüche, **dadurch gekennzeichnet, dass** die Schmierstoffschicht (33) Bornitrid aufweist.

11. Auszugssystem nach einem der vorhergehenden Ansprüche, **dadurch gekennzeichnet, dass** die Schmierstoffschicht (33) Wolframdisulfid aufweist.

12. Auszugssystem nach einem der vorhergehenden Ansprüche, **dadurch gekennzeichnet, dass** die Schmierstoffschicht (33) ein Bindemittel aufweist, das den Schmierstoff an dem Wälzkörperkäfig (37) hält.

13. Auszugssystem nach Anspruch 12, **dadurch gekennzeichnet, dass** das Bindemittel ein Lack ist.

14. Auszugssystem nach, Anspruch 13, **dadurch gekennzeichnet, dass** der Lack mit dem Schmierstoff in den Wälzkörperkäfig (37) eingebrannt ist.

15. Auszugssystem nach einem der vorhergehenden Ansprüche, **dadurch gekennzeichnet, dass** der Wälzkörperkäfig (37) als Anschlag zur Begrenzung einer Bewegung der Auszugselemente (23, 25, 27) ausgebildet ist.

16. Auszugssystem nach einem der vorhergehenden Ansprüche, **dadurch gekennzeichnet, dass** die Schmierstoffschicht (33) zumindest teilweise mehrlagig ausgebildet ist.

17. Auszugssystem nach einem der vorhergehenden Ansprüche, **dadurch gekennzeichnet, dass** die Schmierstoffschicht (33) weitere Füllstoffe, etwa aus Keramik, enthält.

18. Auszugssystem nach einem der vorhergehenden Ansprüche, **dadurch gekennzeichnet, dass** das Auszugssystem (13) herausnehmbar in dem Haushaltsgerät gehaltert ist.

19. Auszugssystem nach einem der vorhergehenden Ansprüche, **dadurch gekennzeichnet, dass** zumindest ein erstes Auszugselement (25) des Auszugssystems (13) mit der Schmierstoffschicht (33) beschichtet ist.

20. Auszugssystem nach einem der vorhergehenden Ansprüche, **dadurch gekennzeichnet, dass** zumindest ein zweites Auszugselement (23, 27) des Auszugssystems (13) mit einer zweiten Schicht (34) beschichtet ist oder unbeschichtet ist.

21. Auszugssystem nach einem der vorhergehenden Ansprüche, **dadurch gekennzeichnet, dass** das erste Auszugselement eine Zwischenschiene (25) ist, die zwischen einer ortsfesten Halteschiene (23) und einer Auszugsschiene (27) zur Halterung eines Gargutträgers (13) gelagert ist.

22. Auszugssystem nach einem der vorhergehenden Ansprüche, **dadurch gekennzeichnet, dass** die Wälzkörper (29) und/oder die Zwischenschiene (25) vor Verunreinigungen geschützt ist.

23. Auszugssystem nach einem der Ansprüche 21 oder 22, **dadurch gekennzeichnet, dass** die Halteschiene (23) und/oder die Auszugsschiene (27) die Wälzkörper (29) und/oder die Zwischenschiene (25) vor Verunreinigungen schützt.

24. Auszugssystem nach einem der Ansprüche 21 bis 23, **dadurch gekennzeichnet, dass** die Halteschiene (23) und/oder die Auszugsschiene (27) die Zwischenschiene (25) umschließt.

25. Auszugssystem nach einem der Ansprüche 21 bis 24, **dadurch gekennzeichnet, dass** die Halteschiene (23) und/oder die Auszugsschiene (27) einen Hohlraum (31) begrenzen, in dem die Zwischenschiene (25) angeordnet ist.

26. Haushaltsgerät mit einem Auszugssystem nach einem der vorhergehenden Ansprüche.

## Claims

1. Pull-out system for a household appliance, in particular a cooking appliance, having a pull-out system (13) which has rolling elements (29) which are arranged in a rolling element cage (37), wherein at least the rolling element cage (37) has a lubricant layer (33), **characterised in that** the rolling element cage (37) has at least one wear surface (46) on which the rolling elements generate lubricant wear by rotation.

2. Pull-out system according to claim 1, **characterised in that** the lubricant layer (33) contains an inorganic solid lubricant.

3. Pull-out system according to claim 1 or 2, **characterised in that** the rolling element cage (37) consists of a mechanically strong material, such as metal, preferably steel.

4. Pull-out system according to one of the preceding claims, **characterised in that** the rolling element cage (37) is designed as a stop for limiting a movement of pull-out elements (23, 25, 27).

5. Pull-out system according to one of the preceding claims, **characterised in that** the rolling element cage (37) has recesses (41), in each of which a ball (29) is rotatably supported.

6. Pull-out system according to one of the preceding claims, **characterised in that** the lubricant layer (33) is designed to be chemically resistant.

7. Pull-out system according to one of the preceding claims, **characterised in that** the lubricant layer (33) is designed to be resistant to high temperatures.

8. Pull-out system according to one of the preceding claims, **characterised in that** the lubricant layer (33) comprises graphite.

9. Pull-out system according to one of the preceding claims, **characterised in that** the lubricant layer (33) comprises molybdenum disulphide.

10. Pull-out system according to one of the preceding claims, **characterised in that** the lubricant layer (33) comprises boron nitride.

11. Pull-out system according to one of the preceding claims, **characterised in that** the lubricant layer (33) comprises tungsten disulphide.

12. Pull-out system according to one of the preceding claims, **characterised in that** the lubricant layer (33) comprises a binder which keeps the lubricant on the rolling element cage (37).

13. Pull-out system according to claim 12, **characterised in that** the binder is a paint.

14. Pull-out system according to claim 13, **characterised in that** the paint is baked into the rolling element cage (37) with the lubricant.

15. Pull-out system according to one of the preceding claims, **characterised in that** the rolling element cage (37) is designed as a stop for limiting movement of the pull-out elements (23, 25, 27).

16. Pull-out system according to one of the preceding claims, **characterised in that** the lubricant layer (33) is designed to be at least partially multilayered.

17. Pull-out system according to one of the preceding claims, **characterised in that** the lubricant layer (33) contains further fillers, such as ceramic.

18. Pull-out system according to one of the preceding claims, **characterised in that** the pull-out system (13) is removably mounted in the household appliance.

19. Pull-out system according to one of the preceding claims, **characterised in that** at least one first pull-out element (25) of the pull-out system (13) is coated with the lubricant layer (33).

20. Pull-out system according to one of the preceding claims, **characterised in that** at least one second pull-out element (23, 27) of the pull-out system (13) is coated with a second layer (34) or is uncoated.

21. Pull-out system according to one of the preceding claims, **characterised in that** the first pull-out element is an intermediate rail (25) which is mounted between a stationary support rail (23) and a pull-out rail (27) for holding a support (13) for food to be cooked.

22. Pull-out system according to one of the preceding claims, **characterised in that** the rolling elements (29) and/or the intermediate rail (25) are protected from contamination.

23. Pull-out system according to one of claims 21 or 22, **characterised in that** the support rail (23) and/or the pull-out rail (27) protects the rolling elements (29) and/or the intermediate rail (25) from contamination.

24. Pull-out system according to one of claims 21 to 23, **characterised in that** the support rail (23) and/or the pull-out rail (27) surrounds the intermediate rail (25).

25. Pull-out system according to one of claims 21 to 24, **characterised in that** the support rail (23) and/or the pull-out rail (27) delimit a cavity (31) in which the intermediate rail (25) is arranged.

26. Household appliance having a pull-out system according to one of the preceding claims.

## Revendications

1. Système d'extraction pour un appareil ménager, notamment un appareil de cuisson, comprenant un système d'extraction (13) qui présente des corps de cylindre (29) qui sont disposés dans une cage (37) de corps de cylindre, au moins la cage (37) de corps de cylindre présentant une couche de lubrifiant (33), **caractérisé en ce que** la cage (37) de corps de cylindre présente au moins une surface de frottement (46) sur laquelle les corps de cylindre produisent un frottement de lubrifiant par rotation.

2. Système d'extraction selon la revendication 1, **caractérisé en ce que** la couche de lubrifiant (33) contient un lubrifiant solide anorganique.

3. Système d'extraction selon la revendication 1 ou 2, **caractérisé en ce que** la cage (37) de corps de cylindre est constituée d'une matière mécaniquement résistante à la charge, par exemple du métal, de préférence de l'acier.

4. Système d'extraction selon l'une quelconque des revendications précédentes, **caractérisé en ce que** la cage (37) de corps de cylindre est réalisée comme butée pour délimiter un mouvement d'éléments d'extraction (23, 25, 27).

5. Système d'extraction selon l'une quelconque des revendications précédentes, **caractérisé en ce que** la cage (37) de corps de cylindre présente des évidements (41) dans lesquels respectivement une bille (29) est logée de manière rotative.

6. Système d'extraction selon l'une quelconque des revendications précédentes, **caractérisé en ce que** la couche de lubrifiant (33) est réalisée de manière chimiquement résistante.

7. Système d'extraction selon l'une quelconque des revendications précédentes, **caractérisé en ce que** la couche de lubrifiant (33) est réalisée de manière résistante aux hautes températures.

8. Système d'extraction selon l'une quelconque des revendications précédentes, **caractérisé en ce que** la couche de lubrifiant (33) présente du graphite.

9. Système d'extraction selon l'une quelconque des revendications précédentes, **caractérisé en ce que** la couche de lubrifiant (33) présente du bisulfure de molybdène.

10. Système d'extraction selon l'une quelconque des revendications précédentes, **caractérisé en ce que** la couche de lubrifiant (33) présente du nitrure de bore.

11. Système d'extraction selon l'une quelconque des revendications précédentes, **caractérisé en ce que** la couche de lubrifiant (33) présente du disulfure de tungstène.

12. Système d'extraction selon l'une quelconque des revendications précédentes, **caractérisé en ce que** la couche de lubrifiant (33) présente un liant qui maintient le lubrifiant sur la cage (37) de corps de cylindre.

13. Système d'extraction selon la revendication 12, **caractérisé en ce que** le liant est un vernis.

14. Système d'extraction selon la revendication 13, **caractérisé en ce que** le vernis est cuit dans la cage (37) de corps de cylindre avec le lubrifiant.

15. Système d'extraction selon l'une quelconque des revendications précédentes, **caractérisé en ce que** la cage (37) de corps de cylindre est réalisée comme butée pour délimiter un mouvement des éléments d'extraction (23, 25, 27).

16. Système d'extraction selon l'une quelconque des revendications précédentes, **caractérisé en ce que** la couche de lubrifiant (33) est réalisée au moins en partie en plusieurs couches.

17. Système d'extraction selon l'une quelconque des revendications précédentes, **caractérisé en ce que** la couche de lubrifiant (33) contient des agents de remplissage supplémentaires, par exemple constitués de céramique.

18. Système d'extraction selon l'une quelconque des revendications précédentes, **caractérisé en ce que** le système d'extraction (13) est maintenu de manière amovible dans l'appareil ménager.

19. Système d'extraction selon l'une quelconque des revendications précédentes, **caractérisé en ce qu'**au moins un premier élément d'extraction (25) du système d'extraction (13) est enduit avec la couche de lubrifiant (33).

20. Système d'extraction selon l'une quelconque des revendications précédentes, **caractérisé en ce qu'**au moins un deuxième élément d'extraction (23, 27) du système d'extraction (13) est enduit avec une deuxième couche (34) ou n'est pas enduit.

21. Système d'extraction selon l'une quelconque des revendications précédentes, **caractérisé en ce que** le premier élément d'extraction est un rail intermédiaire (25) qui est logé entre un rail de maintien stationnaire (23) et un rail d'extraction (27) destiné à maintenir un support de marchandise à cuire (13).

22. Système d'extraction selon l'une quelconque des revendications précédentes, **caractérisé en ce que** les corps de cylindre (29) et/ou le rail intermédiaire (25) est/sont protégé(s) contre les salissures.

23. Système d'extraction selon l'une quelconque des revendications 21 ou 22, **caractérisé en ce que** le rail de maintien (23) et/ou le rail d'extraction (27) protège(nt) les corps de cylindre (29) et/ou le rail intermédiaire (25) contre les salissures.

24. Système d'extraction selon l'une quelconque des revendications 21 à 23, **caractérisé en ce que** le rail de maintien (23) et/ou le rail d'extraction (27) entoure(nt) le rail intermédiaire (25).

25. Système d'extraction selon l'une quelconque des revendications 21 à 24, **caractérisé en ce que** le rail de maintien (23) et/ou le rail d'extraction (27) délimite(nt) un espace creux (31) dans lequel est disposé le rail intermédiaire (25).

26. Appareil ménager muni d'un système d'extraction selon l'une quelconque des revendications précédentes.
